# EUROPÄISCHE PATENTSCHRIFT

(11) **EP 3 525 004 B1**
(45) Veröffentlichungstag und Bekanntmachung des Hinweises auf die Patenterteilung: **14.10.2020**
(21) Anmeldenummer: 18155750.5
(22) Anmeldetag: 08.02.2018
(51) Int. Cl.: G01S 17/32, G01S 17/36, G01S 17/894, G01S 7/481, G01S 7/4915, G01S 7/497, G08B 13/187, G08B 13/24

(54) **TOF SENSOR MIT PRÜFSENDER**
TOF SENSOR WITH TEST TRANSMITTER
CAPTEUR TOF POURVU D'ÉMETTEUR DE CONTRÔLE

(43) Veröffentlichungstag der Anmeldung: 14.08.2019
(73) Patentinhaber: Cedes AG, 7302 Landquart (CH)
(72) Erfinder: Dort, Marcel, 8890 Flums (CH); Triet, Philipp, 7310 Bad Ragaz (CH); Hegelbach, Jürgen, 9451 Kriesern (CH)
(74) Vertreter: Otten, Roth, Dobler & Partner mbB Patentanwälte

(56) Entgegenhaltungen:
- EP-A1- 2 597 482
- EP-A1- 3 156 824
- EP-B1- 2 453 260
- DE-A1- 10 104 418
- DE-A1- 19 936 441
- DE-A1-102005 045 993

## Beschreibung

Die Erfindung betrifft einen Sensor zur Überwachung eines Überwachungsbereichs mit einem Prüfsender zur Überprüfung des Sensors.

Aus dem Stand der Technik sind Sensoren der genannten Art bekannt. Das Patent EP 2 453 260 B1 des Anmelders offenbart einen solchen Sensor bei dem ein zweiter Sender den Empfänger des Sensors mit einem Testsignal beaufschlagt und der Sensor anhand der empfangenen Strahlungsintensität seinen Zustand überprüft. EP 2 597 482 A1 offenbart einen Sensor mit einem zweiten Sender zum Senden eines Kompensationssignals.

Es ist Aufgabe der Erfindung, einen verbesserten Sensor der genannten Art bereit zu stellen.

Diese Aufgabe wird, ausgehend von einem Sensor der eingangs genannten Art, durch einen Sensor nach Anspruch 1 gelöst. Vorteilhafte Ausgestaltungen sind in den weiteren abhängigen Ansprüchen angegeben.

Der erfindungsgemäße Sensor ist ein Sensor zur Überwachung eines Überwachungsbereichs mit einem Sender, einem Prüfsender, einem Empfänger, einer Auswerteeinrichtung, einem Speicher und mit einer Vergleichseinrichtung.

Die genannten Einheiten sind funktionale Einheiten. Die Einrichtungen des Sensors können voneinander abgegrenzt sein, ineinander übergehen oder sich gegenseitig enthalten. Die Einrichtungen oder Teile der Einrichtungen können innerhalb oder auch ausserhalb des Gehäuses des Sensors realisiert sein.

Der Sender ist ausgelegt zum Aussenden von Strahlung in den Überwachungsbereich welche nach Reflektion an einem Objekt im Überwachungsbereich teilweise wieder zum Sensor zurückgeworfen wird. Der Prüfsender ist ausgestaltet zum Aussenden eines Prüfsignals aus Strahlung. Der Empfänger ist ausgestaltet zum Empfangen der an einem oder mehreren Objekten im Überwachungsbereich reflektierten Strahlung des Senders und zum Empfangen der Strahlung des Prüfsenders. Dabei kann der Sender auch dazu ausgelegt sein, das Empfangssignal bereits in gewisser Weise aufzubereiten oder zu verarbeiten. Die Auswerteeinrichtung ist ausgestaltet zur Ermittlung eines Entfernungswertes in Abhängigkeit von der Laufzeitverzögerung oder der Phasenverzögerung einer Modulation zwischen vom Sender oder Prüfsender ausgesendeter und vom Empfänger empfangener Strahlung. Der Speicher ist ausgestaltet zum Speichern eines Erwartungswertes für den erwarteten Entfernungswert des zu empfangenden Prüfsignals. Die Vergleichseinrichtung ist ausgestaltet zum Vergleich eines Entfernungswertes aufgrund eines vom Empfänger empfangen Prüfsignals mit dem Erwartungswert und zur Ausgabe eines Sicherheitssignals in Abhängigkeit vom Vergleich.

Die Vergleichseinrichtung kann dazu ausgestaltet sein, das Sicherheitssignal dann auszugeben, wenn der Entfernungswert aus dem empfangenen Prüfsignal um einen Toleranzwert oder darüber hinaus vom Erwartungswert abweicht.

Die Vergleichseinrichtung kann dazu ausgebildet sein, dass sie den Entfernungswert aus dem empfangen Prüfsignal von der Auswerteeinrichtung übernimmt oder dass sie diesen Wert in Abhängigkeit vom Ausgangssignal des Empfängers selbst bildet. Der Prüfsender und/oder der Speicher und/oder die Vergleichseinrichtung können zusammen als eine Selbsttesteinrichtung ausgebildet sein.

Dieser Sensor kann den Vorteil ausbilden, dass der Sensor mehrere seiner funktionalen Einheiten überprüfen kann. Dieser Sensor kann den Vorteil ausbilden, dass er das korrekte Funktionieren des Empfängers und/oder das korrekte Funktionieren der Auswerteeinrichtung überprüfen kann.

Vorzugsweise ist der Prüfsender zur Einstrahlung auf den Empfänger durch unveränderlichen Weg angeordnet. Das heisst, dass keine Reflektion an beweglichen Objekten erfolgt, die den Strahlengang verändern könnten. Dies kann den Vorteil ausbilden, dass der Empfänger stets die gleiche Einstrahlung vom Prüfsender erfährt und diese gleiche Einstrahlung einfacher mit dem Erwartungswert verglichen werden kann.

Vorzugsweise ist der Prüfsender zur direkten Einstrahlung auf den Empfänger oder
zur Einstrahlung durch unveränderliche Reflexion angeordnet. Vorzugsweise ist der Prüfsender zur Einstrahlung auf den Empfänger durch Reflexion an einer oder mehreren Flächen innerhalb des Gehäuses des Sensors angeordnet. Vorzugsweise ist der Prüfsender, der Empfänger und die Empfängeroptik so angeordnet, dass die Strahlung des Prüfsenders von Grenzflächen der Empfängeroptik zum Empfänger reflektiert wird, insbesondere von der dem Empfänger zugewandten äusseren Linsenoberfläche der Empfängeroptik. Vorzugsweise sind der Prüfsender und der Empfänger vollständig vom Gehäuse und Elementen welche das Gehäuse abschliessen umgeben.

Vorzugsweise ist die Strahlung des Senders und/oder des Prüfsenders moduliert, insbesondere intensitätsmoduliert, insbesondere mit 20 MHz moduliert. Dies kann den Vorteil ausbilden, dass der Empfänger und die Auswerteeinrichtung die Phasenverzögerung der modulierten Intensität zwischen der Aussendung durch den Sender und/oder dem Prüfsender und dem Empfänger empfangen und auswerten können. Dieses Prinzip wird auch Time of Flight (TOF) genannt.

Vorzugsweise ist die Strahlung eine IR-Strahlung. Dadurch ist die Strahlung für Personen nicht sichtbar und daher nicht störend.

Vorzugsweise ist der Sensor dazu ausgebildet, dass er eine Einrichtung zur Synchronisation zwischen einerseits Sender und/oder Prüfsender und andererseits dem Empfänger aufweist, welche die Modulation und/oder ein Muster der Modulation und/oder ein sonstiges Muster der Strahlung des Senders und/oder des Prüfsenders mit dem Empfänger synchronisiert oder mit einem bestimmten Zeitverzug synchronisiert. Dies kann den Vorteil ausbilden, dass die Phasenverzögerung zwischen dem ausgesandten und dem empfangenen Licht einfacher ermittelt werden kann. Ein sonstiges Muster der Strahlung kann der zeitliche Beginn der Strahlung sein.

Vorzugsweise ist der Sensor dazu ausgebildet, dass er eine Einrichtung zur Synchronisation zwischen dem Prüfsender und dem Empfänger aufweist, welche die Modulation und/oder ein Muster der Modulation und/oder ein sonstiges Muster der Strahlung des Prüfsenders mit dem Empfänger mit einem bestimmten Zeitverzug synchronisiert der sich von der Synchronisation zwischen Sender und Empfänger unterscheidet. Insbesondere kann der Zeitverzug der Synchronisation zwischen Prüfsender und Empfänger länger sein als der Zeitverzug zwischen dem Sender und dem Empfänger. Dies kann auch einfach durch andere Schaltzeiten der Bauteile der Ansteuerelektronik für den Prüfsender erfolgen. Insbesondere kann der Trigger zur Synchronisation den Prüfsender später als den Empfänger erreichen. Dadurch wird eine um die Zeitverzögerung längere Flugdauer der Strahlung vom Prüfsender zum Empfänger simuliert. Dies kann den Vorteil ausbilden, dass der Erwartungswert einen Wert erhält, der einfacher zu verarbeiten ist und insbesondere einer Fläche in mittlerer Entfernung in Bezug auf den Überwachungsbereich entspricht.

Vorzugsweise ist der Empfänger als Empfängermatrix mit Empfängermatrixelementen zum Empfang einzelner Bildelementpunkte und insbesondere zur Aufnahme eines 3D Bildes ausgebildet. Dies kann den Vorteil ausbilden, dass der Überwachungsbereich detailliert überwacht werden kann.

Vorzugsweise ist die Auswerteeinrichtung dazu ausgebildet, um für einzelne oder alle Empfängerelemente oder jeweils für Gruppen von Empfängerelementen einen Wert zu ermittelt, insbesondere um ein 3D Bild zu ermitteln. Dies kann den Vorteil ausbilden, dass der Überwachungsbereich detailliert überwacht werden kann.

Vorzugsweise ist der Sensor dazu ausgebildet, dass der Erwartungswert durch den einmaligen oder mehrmaligen Empfang von Strahlung des Prüfsenders ermittelt wird, und insbesondere durch die Auswerteeinrichtung ermittelt wird, und insbesondere einem Wert oder einer Funktion von mehreren Werten der Auswerteeinrichtung beim Empfang eines oder mehrerer Prüfsignale durch den Empfänger, insbesondere einer Mittelung, entspricht. Dies kann den Vorteil ausbilden, dass die Festlegung des Erwartungswertes erleichtert und/oder in seiner Genauigkeit verbessert wird.

Vorzugsweise ist der Sensor dazu ausgebildet, dass der Erwartungswert einen Minimalwert und einen Maximalwert oder einen Mittelwert mit einem Abweichungswert (Schwellwert) aufweist, und insbesondere Einzelwerte für einige oder jedes oder Gruppen von Empfängermatrixelementen aufweist, und insbesondere die Form einer Fläche und insbesondere einer Ebene repräsentiert oder eines Raumabschnittes der durch 2 Flächen oder Ebenen begrenzt ist. Dies kann den Vorteil aufweisen, dass der Erwartungswert in seiner Art dem Wert oder dem Bild entspricht welches die Auswerteeinrichtung vom Prüfsignal ausgibt. Dies kann den Vorteil aufweisen, dass der Erwartungswert mit dem Wert aus dem empfangenen Prüfsignal einfacher vergleichbar ist.

Vorzugsweise ist der Sensor ausgebildet zur Aktivierung des Prüfsenders anstelle des Senders. Dies kann den Vorteil ausbilden, dass der Sender den Empfänger beim Empfang des Prüfsignals des Prüfsenders nicht stört.

Vorzugsweise ist der Sensor zur Aktivierung des Prüfsenders durch ein Aktivierungssignal ausgebildet.

Vorzugsweise ist der Sensor zur periodischen Aktivierung des Prüfsenders, insbesondere alle 100 Millisekunden ausgebildet. Dies kann den Vorteil aufweisen, dass der Sensor stets in korrekter Funktion läuft oder gemäss dem Sicherheitssignal deaktiviert wird.

Vorzugsweise ist der Sensor zur Überwachung des Öffnungsbereichs oder eines Umgebungsbereichs einer Tür oder eines Tores ausgebildet.

Weitere Merkmale der Erfindung sind in den Zeichnungen angegeben.

### Überblick über die Zeichnungen:

Ausführungsbeispiele der Erfindung sind in den Zeichnungen dargestellt und werden im Folgenden näher erläutert. Gleiche Bezugszeichen in den einzelnen Figuren bezeichnen dabei einander entsprechende Elemente. Es zeigen:
- Fig. 1: eine 3D-Ansicht eines erfindungsgemässen Sensors
- Fig. 2: einen Schnitt durch den Sensor der Fig. 1
- Fig. 3: einen Ausschnitt aus dem Schnitt der Fig. 2

### Detaillierte Beschreibung der Zeichnungen:

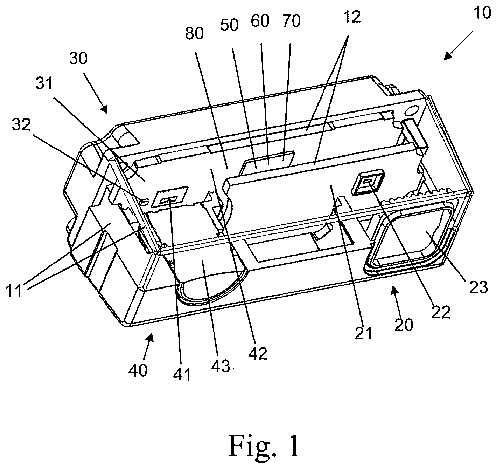

Fig. 1 zeigt eine teilweise aufgeschnittene 3D-Ansicht eines erfindungsgemässen Sensors 10.

Der Sensor weist ein Gehäuse 11 auf in dessen inneren sich Platinen 12 befinden. Innerhalb des Gehäuses sind ein Sender 20, ein Prüfsender 30, ein Empfänger 40, eine Auswerteeinrichtung 50, ein Speicher 60, eine Vergleichseinrichtung 70, und eine Synchronisationseinrichtung 80 angeordnet.

Der Sender 20 umfasst einen oder drei VCSEL Halbleiter-Laser 22 auf einer der Platinen 12 der von einer nicht dargestellten Sendeelektronik 21 auf einer Platine 12 angesteuert wird und seine Strahlung durch eine Senderoptik 22 in einen Überwachungsraum vor dem Sensor hinaus abstrahlt.

Die Senderelektronik steuert den VCSEL Halbleiter-Laser so an, dass dieser eine intensitätsmodulierte Strahlung mit der Modulationsfrequenz von 20 MHz aussendet. Die Lichtwellenlänge des VCSEL Halbleiter-Lasers ist Infrarot.

Der Prüfsender 30 umfasst eine LED 32 auf einer der Platinen 12 die von einer nicht dargestellten Prüfsenderelektronik 31 auf einer der Platinen 12 angesteuert wird. Die Prüfsenderelektronik steuert die LED so an, dass die LED intensitätsmodulierte Strahlung mit der gleichen Modulationsfrequenz wie beim Sender als Prüfsignal aussendet. Die Lichtwellenlänge der LED ist Infrarot ähnlich der Lichtwellenlänge des VCSEL.

Die Synchronisationseinrichtung 80 ist auf einer der Platinen 12 angeordnet und nur symbolhaft dargestellt. Die Synchronisationseinrichtung ist dazu ausgelegt, ein Signal oder eine Signalfolge an den Sender oder Prüfsender und den Empfänger auszugeben, um den Empfänger mit der Modulation der Strahlung des Senders zu synchronisieren, sodass der Empfänger die Phasenverschiebung der Strahlung zwischen Sender und Empfänger ermitteln kann. Durch andere Schaltzeiten der Bauteile der Ansteuerelektronik erreicht das Synchronisationssignal den Prüfsender mit einer Zeitverzögerung später als den Empfänger.

Der Empfänger 40 umfasst einen Sensorchip 41 auf einer der Platinen 12 der von einer nicht dargestellten Empfängerelektronik 42 angesteuert und ausgelesen wird und der reflektierte Strahlung des Senders durch die Empfängeroptik 43 aus dem Überwachungsraum vor dem Sensor empfängt. Der Sensorchip 41 ist eine Sensormatrix mit matrixförmig angeordneten Sensorpixeln. Die Sensorpixel sind 2-tap Demodulationspixel. Der Empfänger nimmt das Signal der Synchronisationseinrichtung 80 auf und synchronisiert die Sensorpixel mit der Modulation der vom Sender oder Prüfsender ausgesandten Strahlung. Auf diese Weise ist der Sensorchip dazu ausgelegt, für jeden Sensorpixel ein Ausgangssignal auszugeben, das der Phasendifferenz zwischen der vom Sender oder Prüfsender ausgegebenen Strahlung und der vom Empfänger empfangenen Strahlung entspricht.

Die Auswerteeinrichtung 50 ist auf einer der Platinen 12 angeordnet und nur symbolhaft dargestellt. Die Auswerteeinrichtung übernimmt für jeden Sensorpixel das Ausgangssignal des Empfängers und berechnet daraus einen Entfernungswert für jeden Pixel, der der Entfernung des vom Pixel abgebildeten Objekts im Überwachungsraum entspricht welches die Strahlung des Senders auf den Empfänger zurück reflektiert. So errechnet die Auswerteeinrichtung eine 3D-Abbildung des Überwachungsraumes der die Entfernung der abgebildeten Objekte in Skalenteile oder in Millimeter darstellt. Im Falle der Einstrahlung durch den Prüfsender setzt der Sender aus und die Auswerteeinrichtung errechnet eine 3D-Fläche die aufgrund der Zeitverzögerung virtuell einem mittleren Abstand im Überwachungsraum entspricht. Diese 3D-Abbildung ist die vom Sensor detektierte Oberfläche, also eine 3D-Fläche. Im Falle einer Sensormatrix kann diese Fläche der Entfernungswert sein den die Auswerteeinrichtung ermittelt.

Die Auswerteeinrichtung ist dazu ausgebildet, ein Steuersignal auszugeben, falls einer der den Sensorpixeln zugeordneten Entfernungswerte einen bestimmten Schwellwert unterschreitet. Der Speicher 60 ist auf einer der Platinen 12 angeordnet und nur symbolhaft dargestellt. Der Speicher enthält einen bestimmten Entfernungswert. Der Erwartungswert kann eine Entfernung oder eine Fläche in einer bestimmten Entfernung oder eine 3D-Abbildung sein.

Die Vergleichseinrichtung 70 ist auf einer der Platinen 12 angeordnet und nur symbolhaft dargestellt. Die Vergleichseinrichtung ist dazu ausgelegt, die vom Empfänger gemessenen und von der Auswerteeinrichtung berechneten Entfernungswerte bei der Einstrahlung eines Prüfsignals durch den Prüfsender mit dem Erwartungswert des Speichers zu vergleichen und in Abhängigkeit von diesem Vergleich ein Sicherheitssignal auszugeben. Insbesondere gibt die Vergleichseinrichtung das Sicherheitssignal aus, wenn die Auswerteeinrichtung für den Fall des Prüfsignals keine 3D-Abbildung ausgibt, die innerhalb von bestimmten Schwellwerten der 3D-Abbildung des Erwartungswertes entspricht.

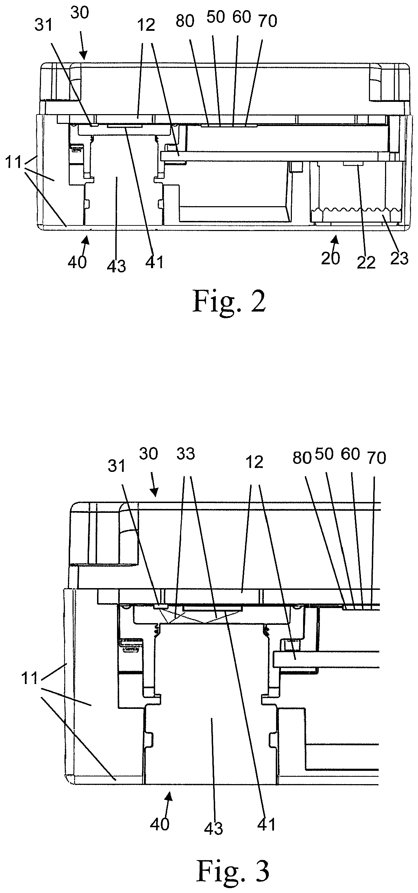

Fig. 2 zeigt einen Schnitt durch den Sensor der Fig. 1 um den Ausschnitt der Fig. 3 im Bereich des Prüfsenders 30 und des Empfängers 40 einfacher zuordnen zu können.

Fig. 3 zeigt einen Ausschnitt aus dem Schnitt der Fig. 2 mit dem Strahlengang 33 der LED 31 des Prüfsenders 30.

Die LED 31 des Prüfsenders 30 ist in räumlicher Nähe zum Sensorchip 41 des Empfängers 40 auf der gleichen Platine 12 wie der Sensorchip angeordnet. Die Empfängeroptik 43 des Empfängers 40 schliesst das Gehäuse 11 des Sensors 10 nach aussen ab. Die LED 31 des Prüfsenders 30 und der Sensorchip des Empfängers sind räumlich nicht voneinander abgeschlossen und vollständig vom Gehäuse und die das Gehäuse abschliessende Empfängeroptik starr umgeben.

Die LED 31 des Prüfsenders 30 sendet Strahlung für das Prüfsignal aus welche, wie im Strahlengang 33 dargestellt, an der in Richtung des Sensorchips 41 weisenden Oberfläche der Senderoptik 43 in Richtung des Sensorchips 41 des Empfängers 40 reflektiert wird. Die LED, die Senderoptik und der Sensorchip sind fest miteinander verbunden, sodass sich der Strahlengang zwischen LED und Sensorchip nicht ändert.

Durch die Synchronisationseinrichtung 80 wird der Empfänger mit dem Prüfsender synchronisiert analog wie beim Sender, jedoch so, dass im Vergleich zum Sender die Synchronisation des Prüfsenders konstant etwas verzögert ist. Dadurch erzeugt der Empfänger für jeden Sensorpixel ein Ausgangssignal das einer Entfernung entspricht, die länger ist als die Länge des Strahlengangs zwischen der LED des Prüfsenders und dem Sensorchip und insbesondere einer Entfernung im mittleren Bereich der Ausdehnung des Überwachungsbereichs entspricht. Die vom Prüfsender erzeugte 3D-Abbildung ist also ein im Vergleich zur Realität ein virtuell entferntere 3D-Abbildung. Dadurch kann die Verarbeitung des Entfernungswertes durch den Sensor einfacher sein.

Zur Erzeugung des Erwartungswertes sendet der Prüfsender ein Prüfsignal aus welches vom Empfänger empfangen und von der Auswerteeinrichtung ausgewertet wird. Die dabei erhaltene 3D-Abbildung gleicht in etwa einer Ebene mit konstantem Abstand und wird als Abstandswert im Speicher als Erwartungswert gespeichert. Der Erwartungswert kann aus dem Sensor ausgelesen werden und extern gespeichert werden und mit mehreren so gebildeten Erwartungswerten zu einem gemittelten Erwartungswert gemittelt werden. Gleichartigen erfindungsgemässen Sensoren wird dieser gemittelte Erwartungswert von aussen eingespielt, sodass die Erzeugung des Erwartungswertes in diesen Sensoren unterbleiben kann.

Während des Betriebs des Sensors wird der Sender etwa alle 100 Millisekunden unterbrochen und während der Pause des Senders sendet der Prüfsender das Prüfsignal von weniger als einer Millisekunde Dauer. Der Empfänger und die Auswerteeinrichtung detektieren und errechnen wie oben angegeben die vom Empfänger detektierte virtuell entferntere 3D-Abbildung.

Die Vergleichseinrichtung 70 übernimmt nun die virtuell entferntere 3D-Abbildung des Prüfsignals und vergleicht deren 3D-Fläche mit dem Abstandswert des Erwartungswertes. Falls nun die 3D-Fläche der 3D-Abbilung des Prüfsignals für eine bestimmte Anzahl von Sensorpixeln um mehr als ein vordefinierter Schwellwert vom Erwartungswert abweicht, dann gibt die Vergleichseinrichtung ein Sicherheitssignal aus. Das Sicherheitssignal hat die Wirkung, dass der Sensor in eine abgesicherte Betriebsart übergeht, seinen Fehlerstatus zur externen Erkennung ausgibt und bis zu einem Resett keine Messwerte oder Befehle aufgrund von Messwerten ausgibt.

### Bezugszeichenliste:

- 10: Sensor
- 11: Gehäuse
- 12: Platinen

- 20: Sender
- 21: Senderelektronik
- 22: VCSEL
- 23: Senderoptik

- 30: Prüfsender
- 31: Prüfsenderelektronik
- 32: LED
- 33: Strahlengang des Prüfsignals

- 40: Empfänger
- 41: Sensorchip
- 42: Empfängerelektronik
- 43: Empfängeroptik

- 50: Auswerteeinrichtung

- 60: Speicher

- 70: Vergleichseinrichtung

- 80: Synchronisationseinrichtung

## Patentansprüche

1. Sensor zur Überwachung eines Überwachungsbereichs
- mit einem Sender (20)
- zum Aussenden von Strahlung in den Überwachungsbereich
- zur Reflektion an einem Objekt im Überwachungsbereich,
- mit einem Prüfsender (30)
- zum Aussenden eines Prüfsignals aus Strahlung,
- mit einem Empfänger (40)
- zum Empfangen
- der am Objekt reflektierten Strahlung des Senders oder
- der Strahlung des Prüfsenders, und
- mit einer Auswerteeinrichtung (50)
- zur Ermittlung eines Entfernungswertes
- in Abhängigkeit von der Verzögerung
- der Laufzeit oder der Phase einer Modulation
- zwischen ausgesendeter und empfangener Strahlung des Sensors,
**dadurch gekennzeichnet, dass** der Sensor weiterhin ausgebildet ist
- mit einem Speicher (60)
- zum Speichern eines Erwartungswertes für den erwarteten Entfernungswert des empfangenen Prüfsignals, und
- mit einer Vergleichseinrichtung (70)
- zum Vergleich
- eines Entfernungswertes aufgrund des empfangenen Prüfsignals
- mit dem Erwartungswert und
- zur Ausgabe eines Sicherheitssignals in Abhängigkeit vom Vergleich.

2. Sensor nach einem der vorhergehenden Ansprüche, **dadurch gekennzeichnet,**
- **dass** der Prüfsender zur Einstrahlung auf den Empfänger durch unveränderlichem Weg (33) angeordnet ist und
- insbesondere zur direkten Einstrahlung auf den Empfänger angeordnet,
- oder zur Einstrahlung durch unveränderliche Reflexion,
- insbesondere zur Einstrahlung auf den Empfänger durch Reflexion an einer oder mehreren Flächen innerhalb des Gehäuses (11) des Sensors angeordnet ist.

3. Sensor nach einem der vorhergehenden Ansprüche, **dadurch gekennzeichnet,**
- **dass** die Strahlung des Senders und/oder des Prüfsenders
- moduliert, insbesondere intensitätsmoduliert, insbesondere mit 20 MHz moduliert ist, und insbesondere eine IR-Strahlung ist.

4. Sensor nach einem der vorhergehenden Ansprüche, **dadurch gekennzeichnet,**
- **dass** der Sensor eine Einrichtung zur Synchronisation (80)
- zwischen Sender und/oder Prüfsender einerseits
- und dem Empfänger andererseits aufweist,
- welche die Modulation und/oder ein Muster der Modulation und/oder ein sonstiges Muster der Strahlung des Senders und/oder des Prüfsenders
- mit dem Empfänger synchronisiert oder mit einem bestimmten Zeitverzug synchronisiert.

5. Sensor nach Anspruch 4, **dadurch gekennzeichnet,**
- **dass** die Einrichtung zur Synchronisation (80)
- dem Prüfsender einen Synchronisationstrigger mit Zeitverzug später als dem Empfänger übergibt.

6. Sensor nach einem der vorhergehenden Ansprüche, **dadurch gekennzeichnet,**
- **dass** der Empfänger
- als Empfängermatrix mit Empfängermatrixelementen zum Empfang einzelner Bildelementpunkte,
- insbesondere zur Aufnahme eines 3D Bildes ausgebildet ist.

7. Sensor nach einem der vorhergehenden Ansprüche, **dadurch gekennzeichnet,**
- **dass** der Empfänger als Empfängermatrix ausgebildet ist und
- **dass** die Auswerteeinrichtung dazu ausgebildet ist, um für einzelne oder alle Empfängerelemente oder jeweils für Gruppen von Empfängerelementen einen Wert ermittelt, insbesondere um ein 3D Bild zu ermitteln.

8. Sensor nach einem der vorhergehenden Ansprüche, **dadurch gekennzeichnet,**
- **dass** der Erwartungswert
- durch den einmaligen oder mehrmaligen Empfang von Strahlung des Prüfsenders ermittelt wird, und
- insbesondere durch die Auswerteeinrichtung ermittelt wird, und
- insbesondere einem Wert oder einer Funktion von mehreren Werten der Auswerteeinrichtung beim Empfang eines oder mehrerer Prüfsignale durch den Empfänger,
- insbesondere einer Mittelung, entspricht.

9. Sensor nach einem der vorhergehenden Ansprüche, **dadurch gekennzeichnet,**
- **dass** der Erwartungswert
- einen Minimalwert und einen Maximalwert oder einen Mittelwert mit einem Abweichungswert aufweist, und
- insbesondere Einzelwerte für einige oder jedes oder Gruppen von Empfängermatrixelementen aufweist, und
- insbesondere die Form einer Fläche und insbesondere einer Ebene repräsentiert oder eines Raumabschnittes der durch 2 Flächen oder Ebenen begrenzt ist.

10. Sensor nach einem der vorhergehenden Ansprüche, **dadurch gekennzeichnet, dass** der Sensor ausgebildet ist
- zur Aktivierung des Prüfsenders anstelle des Senders,
- insbesondere Aktivierung des Prüfsenders durch ein Aktivierungssignal,
- insbesondere zur selbstständigen, periodischen Aktivierung des Prüfsenders, insbesondere alle 100 Millisekunden.

11. Sensor nach einem der vorhergehenden Ansprüche, **dadurch gekennzeichnet,**
- **dass** der Sensor zur Überwachung des Öffnungsbereichs oder eines Umgebungsbereichs einer Tür oder eines Tores ausgebildet ist.

## Claims

1. A sensor for monitoring a surveillance area
- having a transmitter (20)
- for emitting radiation into the surveillance area
- for reflection on an object in the surveillance area,
- having a test transmitter (30)
- for emitting a test signal of radiation,
- having a receiver (40)
- for receiving
- the radiation of the transmitter reflected on the object or
- the radiation from the test transmitter, and
- having an evaluation device (50)
- for determining a distance value
- as a function of the delay,
- the time span or the phase of a modulation
- between emitted and received radiation from the sensor, **characterised in that** the sensor is further designed
- having a memory (60)
- for storing an expected value for the expected distance value of the received test signal, and
- having a comparison device (70)
- for comparing
- a distance value based on the received test signal
- with the expected value and
- for outputting a safety signal depending on the comparison.

2. The sensor according to any one of the preceding claims, **characterised in that**
- the test transmitter is arranged to irradiate the receiver over a constant path (33) and
- arranged in particular for direct irradiation of the receiver,
- or for irradiation by constant reflection,
- arranged in particular to irradiate the receiver by reflection on one or more surfaces within the housing (11) of the sensor.

3. The sensor according to any one of the preceding claims, **characterised in that**
- the radiation from the transmitter and / or the test transmitter
- is modulated, in particular intensity-modulated, in particular modulated at 20 MHz, and in particular is IR radiation.

4. The sensor according to any one of the preceding claims, **characterised in that**
- the sensor has a device for synchronisation (80)
- between transmitter and / or test transmitter on the one hand
- and the receiver on the other hand,
- which synchronises the modulation and / or a modulation pattern and / or another pattern of the radiation of the transmitter and / or the test transmitter
- with the receiver or synchronises said modulation or pattern with a specific time delay.

5. The sensor according to claim 4, **characterised in that**
- the device for synchronisation (80)
- transfers a synchronization trigger with a time delay to the test transmitter later than to the receiver.

6. The sensor according to any one of the preceding claims, **characterised in that**
- the receiver
- is designed as a receiver matrix with receiver matrix elements for receiving individual pixel points,
- in particular to record a 3D image.

7. The sensor according to any one of the preceding claims, **characterised in that**
- the receiver is designed as a receiver matrix and
- that the evaluation device is designed to determine a value, in particular to determine a 3D image, for individual or all receiver elements or for groups of receiver elements.

8. The sensor according to any one of the preceding claims, **characterised in that**
- the expected value
- is determined by the single or multiple reception of radiation from the test transmitter, and
- is determined in particular by the evaluation device, and
- corresponds in particular to a value or a function of a plurality of values of the evaluation device when the receiver receives one or more test signals,
- in particular an average.

9. The sensor according to any one of the preceding claims, **characterised in that**
- the expected value
- has a minimum value and a maximum value or a mean value with a deviation value, and
- in particular has individual values for some or each or groups of receiver matrix elements, and
- represents in particular the shape of a surface and in particular a plane or a spatial section which is delimited by 2 surfaces or planes.

10. The sensor according to any one of the preceding claims, **characterised in that** the sensor is designed
- to activate the test transmitter instead of the transmitter,
- in particular to activate the test transmitter by means of an activation signal,
- in particular to activate the test transmitter independently and periodically, in particular every 100 milliseconds.

11. The sensor according to any one of the preceding claims, **characterised in that**
- the sensor is designed to monitor the opening area or a surrounding area of a door or gate.

## Revendications

1. Capteur destiné à la surveillance d'une zone de surveillance
- comportant un émetteur (20)
- destiné à émettre un rayonnement dans la zone de surveillance
- pour la réflexion sur un objet dans la zone de surveillance,
- comportant un émetteur de contrôle (30)
- destiné à émettre un signal de contrôle à base de rayonnement,
- comportant un récepteur (40)
- destiné à recevoir
- le rayonnement de l'émetteur réfléchi sur l'objet, ou
- le rayonnement de l'émetteur de contrôle, et
- comportant un dispositif d'évaluation (50)
- destiné à déterminer la valeur d'une distance
- en fonction du retard
- du temps de fonctionnement ou de la phase d'une modulation
- entre le rayonnement du capteur émis et le rayonnement du capteur reçu,
**caractérisé en ce que** le capteur est configuré en outre
- avec une mémoire (60)
- destinée à enregistrer une valeur attendue pour la valeur attendue de la distance du signal de contrôle reçu, et
- avec un dispositif de comparaison (70)
- destiné à comparer
- la valeur de la distance fondée sur le signal de contrôle reçu
- avec la valeur attendue et
- à émettre un signal de sécurité en fonction de la comparaison.

2. Capteur selon l'une quelconque des revendications précédentes, **caractérisé en ce que**
- l'émetteur de contrôle est disposé pour émettre un rayonnement vers le récepteur par une course (33) invariable et
- en particulier disposé pour émettre directement un rayonnement vers le récepteur,
- ou pour émettre un rayonnement par réflexion invariable,
- en particulier est disposé pour émettre un rayonnement vers le récepteur par réflexion sur une ou plusieurs surfaces à l'intérieur du boîtier (11) du capteur.

3. Capteur selon l'une quelconque des revendications précédentes, **caractérisé en ce que**
- le rayonnement de l'émetteur et/ou de l'émetteur de contrôle
- est modulé, en particulier modulé en intensité, en particulier modulé à 20 MHz, et en particulier est un rayonnement IR.

4. Capteur selon l'une quelconque des revendications précédentes, **caractérisé en ce que**
- le capteur comporte un dispositif destiné à la synchronisation (80)
- entre l'émetteur et/ou l'émetteur de contrôle d'une part
- et le récepteur d'autre part,
- qui synchronise la modulation et/ou une forme de la modulation et/ou une autre forme du rayonnement de l'émetteur et/ou de l'émetteur de contrôle
- avec le récepteur ou avec un temps de retard déterminé.

5. Capteur selon la revendication 4, **caractérisé en ce que**
- le dispositif destiné à la synchronisation (80)
- transmet à l'émetteur de contrôle un déclencheur de synchronisation avec un temps de retard plus tard qu'au récepteur.

6. Capteur selon l'une quelconque des revendications précédentes, **caractérisé en ce que**
- le récepteur
- est configuré comme matrice de récepteur avec des éléments de matrice de récepteur destinés à la réception de points élémentaires d'image individuels,
- en particulier à la réception d'une image en 3D.

7. Capteur selon l'une quelconque des revendications précédentes, **caractérisé en ce que**
- le récepteur est configuré comme matrice de récepteur et
- **en ce que** le dispositif d'évaluation est configuré pour déterminer une valeur pour certains ou la totalité des éléments récepteurs ou respectivement pour des groupes d'éléments récepteurs, en particulier pour déterminer une image en 3D.

8. Capteur selon l'une quelconque des revendications précédentes, **caractérisé en ce que**
- la valeur attendue
- est déterminée par la réception unique ou à plusieurs reprises du rayonnement du capteur de contrôle, et
- est en particulier déterminée par le dispositif d'évaluation, et
- correspond en particulier à une valeur ou à une fonction de plusieurs valeurs du dispositif d'évaluation lors de la réception par le récepteur d'un ou de plusieurs signaux de contrôle,
- en particulier à une moyenne.

9. Capteur selon l'une quelconque des revendications précédentes, **caractérisé en ce que**
- la valeur attendue
- présente une valeur minimale et une valeur maximale ou une valeur moyenne avec une valeur de tolérance, et
- présente en particulier des valeurs individuelles pour certains ou chacun des éléments de matrice de récepteur ou des groupes de ceux-ci, et
- en particulier représente la forme d'une surface et en particulier d'un plan ou d'une portion d'espace qui est limitée par 2 surfaces ou plans.

10. Capteur selon l'une quelconque des revendications précédentes, **caractérisé en ce que** le capteur est configuré
- pour activer l'émetteur de contrôle au lieu de l'émetteur,
- en particulier activer l'émetteur de contrôle par un signal d'activation,
- en particulier pour l'activation périodique, autonome, de l'émetteur de contrôle, en particulier toutes les 100 millisecondes.

11. Capteur selon l'une quelconque des revendications précédentes, **caractérisé en ce que**
- le capteur est destiné à la surveillance de la zone d'ouverture ou d'une zone environnante d'une porte ou d'un portail.
